# EUROPÄISCHE PATENTANMELDUNG

(11) **EP 2 386 450 A2**
(43) Veröffentlichungstag der Anmeldung: **16.11.2011**
(21) Anmeldenummer: 11166270.6
(22) Anmeldetag: 16.05.2011
(51) Int. Cl.: B60S 1/68

(54) **Reifenreinigungsvorrichtung**

(30) Priorität: 15.05.2010 DE 102010020636
(71) Anmelder: IfL Josef Strasser und Söhne GbR, 84494 Niederbergkirchen (DE)
(72) Erfinder: Strasser, Josef, 84494, Niederbergkirchen (DE)
(74) Vertreter: Epping - Hermann - Fischer

(57) **Zusammenfassung**

Es wird eine Reifenreinigungsvorrichtung angegeben, bei der eine Mehrzahl von Reinigungskrallen (1) kammartig nebeneinander über der Lauffläche eines Reifens (6) angeordnet ist, die bedarfsweise in eine Reinigungsposition geschaltet werden kann, derart, dass bei Rotation des Reifens (6) ein mechanisches Abkratzen von Schmutz vom Reifen (6) erfolgt.

## Beschreibung

Die Erfindung bezieht sich auf eine Reinigungsvorrichtung für Reifen, insbesondere für Reifen von Zugmaschinen, selbstfahrenden Arbeitsmaschinen, sowie Anhänger, die abseits von Straßen, wie zum Beispiel auf landwirtschaftlichen Flächen zum Einsatz kommen.

Die Räder dieser Maschinen bestehen in der Regel aus Gummireifen mit einem Profil von bis zu 10 cm Tiefe.

Im Einsatz auf landwirtschaftlichen Flächen, sowie bei Bauarbeiten auf nicht abgetrockneten Böden tritt das Problem auf, dass Erde und Schmutz am Reifenprofil anhaften. Bei der Fahrt auf Straßen oder Wegen löst sich dies Verschmutzung und führt zu Verunreinigung von Straßen, Wegen und Plätzen. Dies stellt eine Gefährdung für andere Verkehrsteilnehmer dar. Laut Straßenverkehrsordnung sind verschmutzte Fahrbahnen unmittelbar vom Verursacher zu reinigen. In der Praxis tritt oft der Fall ein, dass ein Reinigen der Straße oft gar nicht oder verspätet durchgeführt wird. Dadurch entsteht für den Verursacher ein nicht unerhebliches Risiko, einen Unfall schuldhaft mit zu verursachen. Besonders in den Herbstmonaten, wenn Landwirte die Silomaisernte, Bodenbearbeitung und Feldbestellung durchführen, sind sehr of verschmutzte Straßen anzutreffen.

Ähnliche Probleme treten sowohl im Hochbau wie im Tiefbau auf. Lastkraftwagen und Baumaschinen verschmutzen z.B. bei Aushubarbeiten, oder Transportfahrten bei feuchter Witterung öffentliche Straßen.

Vorrichtungen, die Reifenprofile von Schmutz befreien, bevor sie öffentliche Straßen passieren, gibt es als stationäre Anlagen. Diese haben den Nachteil, dass sie aufwendig zu transportieren sind. Dennoch sind sie z. B. im Bau durchaus einsetzbar.

In der Landwirtschaft sind stationäre Reinigungsanlagen für Reifen nicht geeignet, da sie zu wenig mobil sind.

Der vorliegenden Erfindung liegt die Aufgabe zu Grunde, eine Reinigungsvorrichtung zu schaffen, die beispielsweise an einen Schlepper, an einer selbstfahrenden Arbeitsmaschine, an einem Lkw, oder an einen Anhänger fest angebaut werden kann. Idealerweise soll sich die Reinigungsvorrichtung bedarfsweise zuschalten lassen, um anhaftende Erde und Schmutz von den Reifen zu entfernen, bevor diese Straßen, Wege etc. passieren.

Diese Aufgabe wird durch eine Reinigungsvorrichtung mit den Merkmalen des Schutzanspruches 1 gelöst. Vorteilhafte Weiterbildungen sind Gegenstand von Unteransprüchen.

Der Offenbarungsgehalt der Patentansprüche wird durch Rückbezug auf diese in die Beschreibung aufgenommen.

Die Reinigungsvorrichtung ist vorteilhafterweise am Fahrzeug, wie beispielsweise Schlepper, selbstfahrende Arbeitsmaschine, Anhänger etc. fest angebaut und ist somit immer verfügbar. Sie ist während der Fahrt zuschaltbar und verursacht keine wesentliche Verzögerung von Arbeitsabläufen.

Die Reinigungsvorrichtung gemäß der Erfindung umfasst Reinigungskrallen, die nebeneinander kammartig über dem Reifen angeordnet sind, vorteilhafterweise über dessen gesamte Breite oder zumindest derart, dass eine Reinigung des Reifens über dessen gesamte Breite möglich ist.

Die Krallen sind besonders bevorzugt aus Federstahl gefertigt. Dabei ist sowohl Rundstahl als auch Flachstahl geeignet.

Die Krallen sind durch ein Haltepaket miteinander verbunden und parallel in einen Abstand von ca. 2-5 cm voneinander angeordnet. Das Haltepaket ist über ein Drehgelenk am Halterahmen verbunden.

Im Reinigungseinsatz werden beim Vorwärtsfahren die Krallen über das Haltepaket an die Reifenoberfläche gedrückt.

Das Andrücken des Haltepakets erfolgt bevorzugt hydraulisch oder pneumatisch durch einen Hubzylinder, der am Halterahmen befestigt ist und Druck auf das Haltepaket gibt. Durch den Druck des Hubzylinders auf das Haltepaket werden die Reinigungskrallen beim Reinigungsvorgang auf die Reifenoberfläche gespannt. Da die Krallen aus flexiblen Federstahl bestehen, passen sie sich dem Reifenprofil relativ gut an.

Durch langsames Vorwärtsfahren wird ein Großteil des Schmutzes, der an der Reifenoberfläche haftet, mit Hilfe der Reinigungskrallen abgekratzt.

Die Reinigungskrallen müssen rechtzeitig, bevor die Räder die Straße passieren zugeschaltet werden. Beim Reinigungsvorgang sollte das Fahrzeug etwa in Schrittgeschwindigkeit vorwärts bewegt werden, damit die Krallen genügend Zeit haben, sich dem Reifenprofil anzupassen.

Es ist darauf zu achten, dass beim Reinigungsvorgang keinesfalls rückwärts gefahren wird, da dies zu Schäden an den Reinigungskrallen führen kann. Es ist auch möglich eine elektronische Sperre einzubauen, die ein versehentliches Rückwärtsfahren ausschließt.

Am Ende des Reinigungsvorgangs werden die Krallen wieder über das hydraulisch gesteuerte Haltepaket vom Reifenprofil weggeschaltet. Die Reinigungskrallen sind so gestaltet, dass sie im ausgeschalteten Zustand unter dem Kotflügel Platz haben und somit zu keiner Beeinträchtigung der Fahrzeugnutzung führen können.

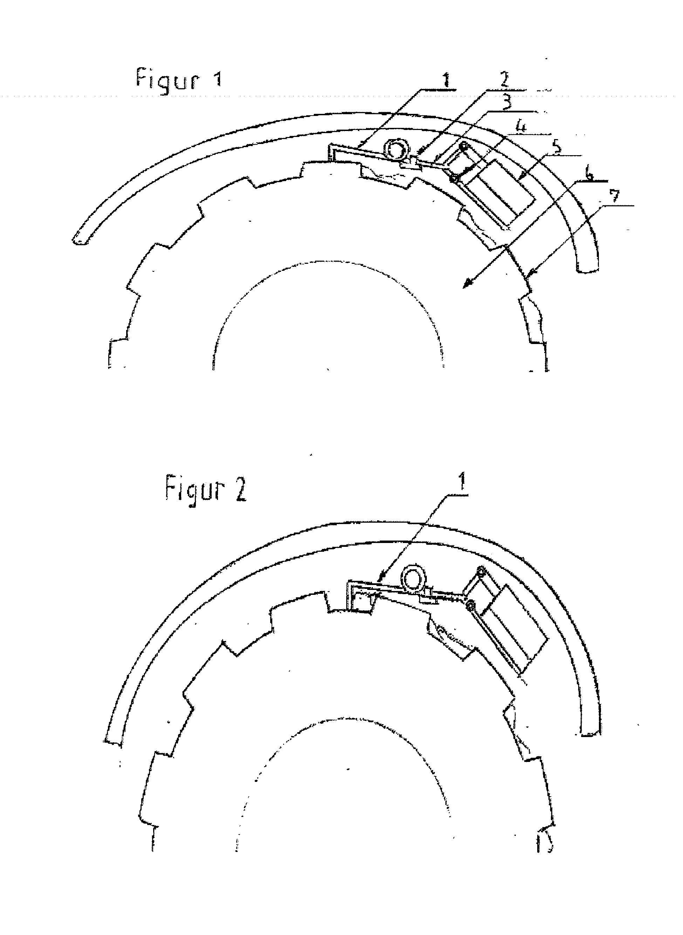

Ein bevorzugtes Ausführungsbeispiel der Reinigungsvorrichtung ist in den Figuren 1-3 schematisch dargestellt.

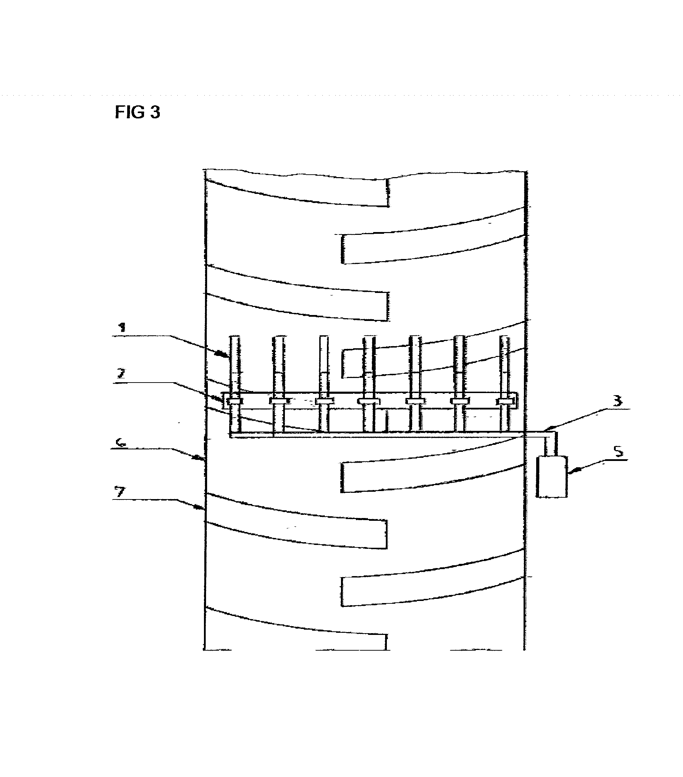

Figur 1 zeigt die schematische Darstellung der Seitenansicht eines Reifens 6, beispielsweise eines Schlepperreifens, mit Stollen 7. Über dem Reifen 6 ist eine Mehrzahl von nebeneinander angeordneten Reinigungskrallen 1 (siehe Figur 3) angeordnet. Die Reinigungskrallen 1 sind von einem Haltepaket 2 in einer Reihe nebeneinander über dem Reifen gehalten und vermittels eines Halterahmens 3, eines Drehgelenks 4 und eines Druckzylinders 5 auf den Reifen 6 gespannt.

Das Haltepaket 2 ist über ein Drehgelenk 4 am Halterahmen 3 befestigt.

Die Reinigungsvorrichtung umfassend Reinigungskrallen, Haltepaket, Halterahmen, Drehgelenk und Druckzylinder sind am Fahrzeug befestigt und vorzugsweise unter dem jeweiligen Kotflügel angeordnet.

Figur 2 zeigt eine weitere schematische Darstellung der Seitenansicht eines Reifens 6 mit Reinigungsvorrichtung, wobei sich eine Reinigungskralle 1 in einer Mulde zwischen zwei Stollen 7 befindet. Die Reinigungskrallen 1 sind im zugeschalteten Zustand der Reinigungsanlage derart auf die Reifenoberfläche gespannt, dass sie beim vorwärts Fahren in die Mulden zwischen den Stollen gedrückt werden und am Reifen anhaftender Schmutz abgekratzt wird.

Figur 3 zeigt eine schematische Darstellung einer Draufsicht des Reifens mit Reinigungsvorrichtung gemäß Figur 1. Die Reinigungskrallen 1 sind über das Haltepaket 2 kammartig über dem Reifen 6 angeordnet. Das Haltepaket ist um etwa 3 - 5 cm schmäler als der Reifen. Dadurch wird einer Beschädigung vorgebeugt.

## Patentansprüche

1. Reifenreinigungsvorrichtung, **dadurch gekennzeichnet,**
**dass** eine Mehrzahl von Reinigungskrallen (1) kammartig nebeneinander über der Lauffläche eines Reifens (6) angeordnet ist, die bedarfsweise in eine Reinigungsposition geschaltet werden kann, derart, dass bei Rotation des Reifens (6) ein mechanisches Abkratzen von Schmutz vom Reifen (6) erfolgt.

2. Reifenreinigungsvorrichtung nach Anspruch 1, **dadurch gekennzeichnet,**
**dass** die Reinigungskrallen (1) aus Federstahl gefertigt sind.

3. Reifenreinigungsvorrichtung nach Anspruch 1 oder 2, **dadurch gekennzeichnet, dass** die Reinigungskrallen (1) an einem Halterahmen (3) angeordnet und vermittels eines Haltepakets (2), das in einem Abstand zum Halterahmen (3) angeordnet ist, parallel zueinander gehalten sind.

4. Reifenreinigungsvorrichtung nach mindestens einem der vorher genannten Ansprüche, **dadurch gekennzeichnet, dass** die Reinigungskrallen (1) mittels Andrückmechanik (3,4,5) zu- und abgeschaltet werden.

5. Reifenreinigungsvorrichtung nach mindestens einem der vorher genannten Ansprüche, **dadurch gekennzeichnet, dass** sie zwischen einem über dem Reifen (6) angeordneten Kotflügel und der Lauffläche des Reifens (6) oder entsprechend unter einem speziellen Schutzblech angeordnet ist.
